(19) Europäisches Patentamt

European Patent Office

Office européen des brevets

(11) **EP 1 217 712 A2**

(12) **EUROPÄISCHE PATENTANMELDUNG**

(43) Veröffentlichungstag:
   **26.06.2002 Patentblatt 2002/26**

(51) Int Cl.⁷: **H02K 1/04**, H02K 3/30,
   **H02K 3/32**

(21) Anmeldenummer: **01129013.7**

(22) Anmeldetag: **06.12.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **22.12.2000 DE 10064817**

(71) Anmelder: **SIEMENS AKTIENGESELLSCHAFT**
   **80333 München (DE)**

(72) Erfinder:
   • **Raith, Sebastian**
    **91056 Erlangen (DE)**
   • **Segger, Bernd**
    **91052 Erlangen (DE)**

(54) **Bedämpfung von Resonanzüberhöhungen bei einem an einem Umrichter mit Spannungszwischenkreis betriebenen elektrischen Motor durch erhöhte Verlusterzeugung im Bereich kritischer Eigenfrequenzen**

(57)   Bei einem Umrichtersystem mit Spannungszwischenkreis, das mit einer Netzeingangsdrossel im Hochsetzstellerbetrieb arbeitet oder andere eingangsseitige Induktivitäten aufweist, besteht die Gefahr, dass sich im Verband mit Motoren über Ableitkapazitäten Systemeigenschwingungen ausbilden. Wenn nun der Motor einen Amplituden-Frequenzgang mit einer ausgeprägten Resonanzfrequenz im Bereich solcher Systemeigenschwingungen aufweist, so besteht die Gefahr, dass am Motorsternpunkt (S) höhere Spannungen auftreten als an den Motorphasen (U, V, W). Dem wird durch die Erfindung vorgebeugt, indem für den Ständer im Motor solche Materialien, vor allem kapazitive Elemente wie verlustbehaftete Dielektrika oder Wirbelstromverluste erzeugende induktive Elemente, eingesetzt werden, die eine erhöhte Verlusterzeugung im Bereich von asymmetrisch gegen Erdpotential anregenden Systemschwingungen ($f_{sys}$) des Umrichtersystems ($L_K$, UR, L, M) mit sich bringen.

## FIG 20

EP 1 217 712 A2

**Beschreibung**

Die Erfindung betrifft ein Verfahren zur Bedämpfung von Resonanzüberhöhungen an einem Motorsternpunkt bei einem an einem Spannungszwischenkreis-Umrichter mit eingangsseitiger Induktivität, insbesondere einer Netzeingangsdrossel, zu betreibenden elektrischen Motor, der aufgrund von Eigenschaften seiner Wicklungsstränge einen Frequenzgang mit mindestens einer Resonanzfrequenz gegen Erdpotential aufweist, sowie einen entsprechenden elektrischen Motor mit einer solchen Bedämpfung von Resonanzüberhöhungen.

In heutigen Umrichtersystemen mit Spannungszwischenkreis, insbesondere in mehrachsigen solchen Umrichtersystemen, können sich Systemschwingungen ausbilden, die praktisch nicht bedämpft werden. Dies betrifft im wesentlichen Umrichter mit Spannungszwischenkreis und einer geregelten Einspeisung in Form eines geregelten netzseitigen Stromrichters, auch als Eingangsstromrichter bezeichnet.

Umrichter dienen prinzipiell zum Betrieb von elektrischen Maschinen mit variabler Speisefrequenz. Ein solcher Zwischenkreis-Frequenzumrichter ermöglicht es, einen elektrischen Motor, z.B. eine Drehfeldmaschine wie etwa die Synchronmaschine, nicht mehr nur direkt am Netz und damit an eine starre Drehzahl gebunden zu betreiben, sondern es kann das starre Netz durch ein elektronisch erzeugtes frequenzvariables und auch amplitudenvariables Netz zur Speisung der elektrischen Maschine ersetzt werden.

Eine Entkopplung der beiden Netze, zum einen dem versorgenden Netz mit fester Amplitude und Frequenz und zum anderen dem die elektrische Maschine speisenden Netz mit variabler Amplitude und Frequenz, erfolgt über einen Gleichspannungsspeicher oder einen Gleichstromspeicher in Form des sogenannten Zwischenkreises. Solche Zwischenkreis-Umrichter weisen dabei im wesentlichen drei zentrale Baugruppen auf:

- einen netzseitigen Eingangsstromrichter, der ungesteuert (z.B. Diodenbrücken) oder gesteuert ausgeführt sein kann,

wobei eine Energierückspeisung in des Netz nur mit einem gesteuerten Eingangsstromrichter möglich ist;

- einen Energiespeicher im Zwischenkreis in Form eines Kondensators bei einem Spannungszwischenkreis und einer Drossel bei einem Stromzwischenkreis;
- einen ausgangsseitigen Maschinenstromrichter bzw. Wechselrichter zur Speisung der Maschine, der in der Regel über eine Drehstrom-Brückenschaltung mit sechs löschbaren Stromventilen, z.B. IGBT-Transistoren, die Gleichspannung eines Spannungszwischenkreises in ein Drehspannungssystem umsetzt.

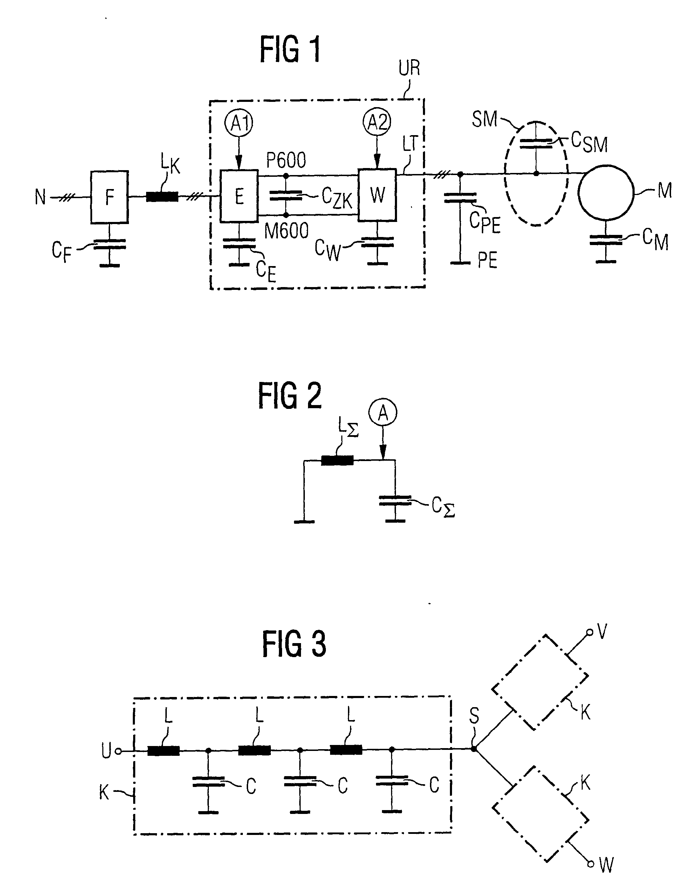

Ein solches Umrichtersystem mit Spannungszwischenkreis, das u.a. aufgrund eines sehr hohen Frequenz- und Amplitudenstellbereichs bevorzugt bei Haupt- und Servoantrieben in Werkzeugmaschinen, Robotern und Produktionsmaschinen zum Einsatz gelangt, ist in der Darstellung nach FIG 1 in Form einer Prinzipskizze gezeigt.

Der Umrichter UR ist über einen Filter F und eine Speicherdrossel mit der Induktivität $L_K$ an ein Drehstromnetz N angeschlossen. Der Umrichter UR weist die beschriebene Einspeisung E, einen Spannungszwischenkreis mit der Speicherkapazität $C_{ZK}$ und einen Ausgangswechselrichter W auf. Gezeigt ist eine geregelte Einspeisung E, die durch schaltende Bauelemente (z.B. eine Drehstrombrückenschaltung aus IGBT-Transistoren) geregelt betrieben wird, wodurch die Anordnung nach FIG 1 eine Anregung A1 erfährt. Der Wechselrichter W wird ebenfalls über weitere schaltende Bauelemente geregelt, z.B. wiederum mittels einer Drehstrombrückenschaltung mit sechs IGBT-Transistoren. Die Tatsache, dass auch im Wechselrichter Schalthandlungen stattfinden, stellt ebenfalls eine Anregung A2 des Systems dar. Der Kondensator $C_{ZK}$ im Spannungszwischenkreis ist zwischen die positive Zwischenkreisschiene P600 und die negative Zwischenkreisschiene M600 geschaltet. Der Wechselrichter ist ausgangsseitig über eine Leitung LT mit Schutzleiter PE und Schirmung SM mit einem Motor M in Form einer Drehstrommaschine verbunden.

Das festfrequente Drehstromnetz N speist nun über den Filter F und die Speicherdrossel $L_K$ mittels der geregelten Einspeisung den Zwischenkreiskondensator $C_{ZK}$ über den Eingangsstromrichter E, wobei der Eingangsstromrichter E (z.B. ein Pulsumrichter) mit der Speicherdrossel $L_K$ als Hochsetzsteller arbeitet. Nach dem Bestromen der Speicherdrossel $L_K$ wird diese mit dem Zwischenkreis verbunden und treibt den Strom entgegen der größeren Spannung in den Kondensator $C_{ZK}$. Dadurch kann die Zwischenkreisspannung auch über dem Scheitelwert der Netzspannung liegen.

Diese Kombination stellt somit quasi eine Gleichspannungsquelle dar. Aus dieser Gleichspannung formt der Wechselrichter W in der beschriebenen Weise wieder ein Drehspannungssystem, wobei die Ausgangsspannung im Gegensatz zur sinusförmigen Spannung eines Drehstromgenerators aufgrund der elektronischen Erzeugung über eine Brückenschaltung nicht den Verlauf einer idealen Sinusschwingung, sondern neben der Grundschwingung auch Oberwellen aufweist.

Neben den beschriebenen Elementen einer solchen Anordnung muss jedoch auch berücksichtigt werden, dass parasitäre Kapazitäten auftreten, die die Entstehung von Systemschwingungen in einem solchen Umrichtersystem begünstigen. So wiesen neben dem Filter F mit einer Ableitkapazität $C_F$ auch der Eingangsstromrichter E, der Wechselrichter W und der Motor M Ableitkapazitäten $C_E$, $C_W$ und $C_M$ gegen Erde auf. Daneben treten zusätzlich eine Kapazität $C_{PE}$ der Leitung LT gegen den Schutzleiter PE und eine Kapazität $C_{SM}$ der Leitung LT gegen die geerdete Schirmung SM auf.

Die Erfinder haben nun erkannt, dass sich eine besonders ausgeprägte Anregung dieser Systemschwingungen in der Einspeisung E befindet. Je nach dem gewählten Regelungsverfahren zur Einspeisung werden dabei 2 oder 3 Phasen des Netzes N kurzgeschlossen, um die Speicherdrossel $L_K$ zu bestromen. Werden alle drei Phasen U, V, W kurzgeschlossen, so liegt entweder die positive P600 oder die negative Zwischenkreisschiene M600 hart am Sternpunkt des versorgenden Netzes (i.d.R. nahe Erdpotenzial je nach Nullsystemanteil). Werden 2 Phasen des Netzes N kurzgeschlossen, so liegen die betreffenden Zwischenkreisschienen P600 und M600 hart auf einem induktiven Spannungsteiler der 2 Netzphasen.

Je nach Situation der Netzspannungen ist diese Spannung in der Nähe des Erdpotenzials (ca. 50-60V). Wegen der in der Regel großen Zwischenkreiskapazität $C_{ZK}$ (stetiger Spannungsverlauf) liegt die andere Zwischenkreisschiene 600V tiefer bzw. höher und kann damit auch die verbleibende Phase des Netzes verreißen. In beiden Fällen wird der Zwischenkreis besonders stark aus seiner "natürlichen", symmetrischen Ruhelage (+/-300V gegen Erde) ausgelenkt, was eine besonders starke Anregung der Systemschwingung darstellt.

Im Hinblick auf die Entstehung von unerwünschten Systemschwingungen erlaubt der für den Anwendungsbereich relevante Frequenzbereich unterhalb von 50 bis 100 kHz die Berechnung einer Resonanzfrequenz mit konzentrierten Elementen. Dabei sind die Ableitkapazitäten $C_F$ gegen Erde im Filter F in der Regel so groß, dass diese nicht frequenzbestimmend wirken. Dabei kann man davon ausgehen, dass eine dominante Anregung zu Schwingungen vor den geschilderten Kapazitäten erfolgt und die Filterableitkapazität $C_F$ außer Betracht bleiben kann.

Die Resonanzfrequenz $f_{res}(sys)$ dieses Systems, die im folgenden mit $f_{sys}$ bezeichnet wird, ergibt sich somit zu:

$$f_{sys} = \frac{1}{2\pi\sqrt{L_\Sigma \cdot C_\Sigma}} \tag{1}$$

mit

$$L_\Sigma = L_K + L_F \tag{2}$$

wobei $L_K$ den dominanten Anteil darstellt und $L_F$ die umrichterseitig wirksamen asymmetrischen induktiven Elemente im Filter (z.B. stromkompensierte Drosseln) sind, und

$$C_\Sigma = C_E + C_W + C_{PE} + C_{SM} + C_M \tag{3}$$

Dieser Zusammenhang ist in der Darstellung nach FIG 2 schematisch gezeigt. Dabei bilden $L_\Sigma$ und $C_\Sigma$ einen passiven Kreis, der durch eine Anregung A angeregt wird und sich auf seine natürliche Resonanzfrequenz $f_{sys}$ einschwingt.

Als Folge bekommen die Potenziale der Zwischenkreisschienen P600 und M600 zusätzlich zu den betriebsbedingten Verschiebungen mit beispielsweise 600V Amplitude eine zusätzliche unerwünschte Schwingung mit einer Amplitude von bis zu mehreren hundert Volt aufmoduliert.

Bei elektrischen Motoren M allgemein, vor allem aber wenn sie in Polspultechnik ausgeführt sind (z.B. Torquemotoren), kann ein Frequenzgang mit ausgeprägten Resonanzüberhöhungen gegen Erdpotential auftreten, wenn sie an allen Motorklemmen gleichtaktig gegen Erde angeregt werden, z.B. durch die vorangehend dargestellten unerwünschten Systemschwingungen.

Erklärbar sind diese Resonanzstellen durch ein asymmetrisches Ersatzschaltbild einer Kettenleiterschaltung K parasitärer Elemente (Induktivitäten L und Ableitkapazitäten C) in der Motorwicklung, wie sie in FIG 3 schematisch skizziert ist. Dabei ist beispielhaft der Wicklungsstrang einer Phase U eines Drehstrommotors M mit den drei Phasen U, V, W gezeigt, deren Wicklungsstränge im Motorsternpunkt S elektrisch miteinander verbunden sind. Die Eingangsspannungen des vom Wechselrichter W generierten dreiphasigen Drehstroms liegen an den dem Sternpunkt S gegenüberliegenden Außenklemmen der jeweiligen Wicklungsstränge an.

Dies trifft insbesondere bei Motoren in Polspultechnik zu, bei denen einzelne Kettenvierpole des Kettenleiters K aufgrund des Aufbaus makroskopisch plausibel sind und im wesentlichen einer einzelnen Polspule entsprechen.

Bei der Polspultechnik weisen die aus Elektroblechen bestehenden Magnetkerne Zähne auf, die als Polkerne dienen, auf die vorgefertigte Spulen aufgesetzt und entsprechend verschaltet werden. Die einzelnen Induktivitäten L sind, wie aus FIG 3 ersichtlich, elektrisch in Reihe geschaltet, wobei jede Polspule eine kapazitive Kopplung zum Polkern (Elektroblech) besitzt, auf dem die Spule aufgebracht ist. Diese jeweiligen Kapazitäten sind als Ableitkapazitäten C gegenüber Masse dargestellt, die vom magnetischen Kern gebildet wird.

Jedoch lässt sich das geschilderte Phänomen auch bei Motoren anderer Bauweise (z.B. in sogenannter wilder Wicklung) mit einem Modell eines Kettenleiters K erklären, indem dieser eine Ersatzschaltung mit identischen Vierpolen in Form von LC-Schwingkreisen darstellt, deren Elemente den Frequenzgang nachbilden.

Die Überhöhung tritt dabei im Bereich des Sternpunktes S auf, der normalerweise nicht gezielt auf Spannungsbelastungen ertüchtigt wird. Wenn die Systemschwingung des Umrichtersystems in der Nähe einer Motoreigenfrequenz liegt, dann kann das Isolationssystem gegen Erde, insbesondere am Sternpunkt S, überlastet werden und einen frühzeitigen Ausfall des Motors M zur Folge haben, da am Motorsternpunkt resonanzbedingt wesentlich höhere Spannungen als an den Motorklemmen auftreten können.

Diese Aussage gilt im Prinzip für alle Spannungsniveaus (Nieder-, Mittel- und Hochspannungssysteme), vor allem aber, wenn zum einen auf der Umrichterseite UR nach dem Hochsetzstellerprinzip (mit Speicherdrossel $L_K$) gearbeitet wird, und auf der anderen Seite im Motor M ein Frequenzgang mit ausgeprägten Resonanzüberhöhungen gegen Erdpotential auftritt, z.B. bei Motoren mit besonders niedriger Motoreigenfrequenz, weil hier die Eigendämpfung im Motor durch Wirbelstromverluste, Ummagnetisierungsverluste etc. besonders niedrig ist.

Zu ähnlichen Problemen kommt es auf dem Gebiet der elektrischen Maschinen immer wieder, wenn transiente Überspannungen auftreten. Daher werden die Überspannungen zur Vermeidung von Durchschlägen begrenzt. Beispielsweise wird gemäß der DE 38 26 282 A1 ein spannungsabhängiger Metalloxid Widerstand einer Spule zur Überspannungsbegrenzung parallel geschaltet. In der DE 28 34 378 B2 werden zur Querfelddämpfung Wicklungsabschnitte kurzgeschlossen. In ähnlicher Weise werden laut DE 24 33 618 A1 bei einer Synchronmaschine transiente Überspannungen durch Querfelddämpferstäbe gedämpft.

Darüber hinaus wird in der EP-A-O 117 764 beschrieben, wie Überspannungen, die aufgrund von Resonanzphänomenen auftreten, durch ferroelektrische Isolatoren zwischen den Spulenwicklungen unterdrückt werden können. Schließlich wird in der EP-B-O 681 361 das Problem höherer harmonischer Schwingungen angesprochen, das bei Umrichtern und Gleichrichtern mit Leistungsthyristoren auftreten kann. Die Dämpferwicklung wird demzufolge mit Kondensatoren zu Resonanzkreisen verschaltet. Die Resonanzkreise besitzen eine Resonanzfrequenz, die 6n mal so hoch wie die Grundfrequenz der Synchronmaschine ist. Damit lassen sich höhere harmonische Schwingungen einer Grundwelle absorbieren.

Das Problem von möglichen Resonanzüberhöhungen im Sternpunkt S eines Motors M bleibt jedoch bestehen.

Aufgabe der vorliegenden Erfindung ist es daher, durch solche Systemschwingungen angeregte Resonanzüberhöhungen in einem an einem solchen Umrichtersystem betriebenen elektrischen Motor wirksam zu vermeiden.

Gemäß der vorliegenden Erfindung wird diese Aufgabe durch ein Verfahren zur Bedämpfung von Resonanzüberhöhungen an einem Motorsternpunkt bei einem an einem Spannungszwischenkreis-Umrichter mit eingangsseitiger Induktivität, insbesondere einer Netzeingangsdrossel, zu betreibenden elektrischen Motor gelöst, der aufgrund von Eigenschaften seiner Wicklungsstränge einen Frequenzgang mit mindestens einer Resonanzfrequenz gegen Erdpotential aufweist, indem für den Ständer im Motor solche Materialien eingesetzt werden, die eine erhöhte Verlusterzeugung im Bereich von asymmetrisch gegen Erdpotential anregenden Systemschwingungen des Umrichtersystems, insbesondere im Frequenzbereich oberhalb von 10 kHz, mit sich bringen.

Ferner wird die Aufgabe der Erfindung durch einen elektrischen Motor zum Betrieb an einem Spannungszwischenkreis-Umrichter mit eingangsseitiger Induktivität, insbesondere einer Netzeingangsdrossel, mit einem durch Wicklungsinduktivitäten und Ableitkapazitäten bedingten Frequenzgang mit ausgeprägter Resonanz gegen Erdpotential gelöst, wobei der Motor solche Ständermaterialien aufweist, die erhöhte Verluste im Bereich von asymmetrisch gegen Erdpotential anregenden Systemschwingungen des Umrichtersystems, insbesondere im Frequenzbereich oberhalb von 10 kHz, erzeugen.

Sowohl für den Motor, als auch für das Verfahren gemäß der Erfindung hat es sich als günstig herausgestellt, wenn in den kapazitiven Elementen des Motors im Bereich von asymmetrisch gegen Erdpotential anregenden Systemschwingungen des Umrichtersystems erhöhte Verluste erzeugt werden.

Dies lässt sich besonders gut durch verlustbehaftete dielektrische Materialien mit einer relativen Dielektrizitätskonstante mit einem entsprechenden frequenzabhängigen Verlustfaktor erreichen.

Es hat sich dabei herausgestellt, dass entsprechende dielektrische Materialien für die Hauptisolation, insbesondere in der Nutkastenauskleidung des Motorständers, vorteilhaft eingesetzt werden können.

Ergänzend lassen sich entsprechende dielektrische Materialien auch für die Drahtisolation und/oder Phasenisolation einsetzen.

Eine andere vorteilhafte Ausgestaltung der Erfindung erzeugt in den induktiven Elementen des Motors im Bereich von asymmetrisch gegen Erdpotential anregenden Systemschwingungen des Umrichtersystems erhöhte Verluste.

Dies gelingt besonders gut, indem gezielt entsprechende frequenzabhängige Wirbelstromverluste im Kernmaterial des Motors erzeugt werden. Eine Möglichkeit hierzu besteht in einer Erhöhung der Dicke der Ständerbleche des Motors soweit, bis darin ausreichende frequenzabhängige Wirbelstromverluste im Bereich kritischer Systemschwingungen erzeugt werden.

Diese Maßnahmen haben sich besonders bei elektrischen Motoren mit Wicklungssträngen in Polspultechnik als vorteilhaft herausgestellt, die jeweils eine Kettenleiterstruktur aus Induktivitäten und Ableitkapazitäten bilden, wenn die mittels der verwendeten Ständermaterialien erzeugten Verluste zur Bedämpfung dieser Kettenleiterstrukturen dienen. Dies gilt insbesondere für den Fall, dass die verwendeten Ständermaterialien so ausgeprägt sind, dass diese an den Motorphasen asymmetrisch gegen Erde anregende Gleichtaktströme des Umrichtersystems in der Kettenleiterstruktur bedämpfen.

Jedoch lässt sich das Prinzip der Erfindung auch auf beliebige andere Bauformen von elektrischen Motoren anwenden, vor allem auch auf solche in sogenannter wilder Wicklungstechnik, insbesondere Niederspannungsmotoren. Als besonders günstig hat sich dies bei solchen Antrieben mit großen geometrischen Abmessungen erwiesen, bei denen aufgrund einer großen Nutfläche große Ableitkapazitäten bestehen, die zu besonders niedrigen Resonanzfrequenzen $f_{res}$ führen.

Solange nämlich solche ausgeprägten Resonanzstellen des Motors weit oberhalb möglicher Systemschwingungen des Umrichtersystems liegen, ist die Gefahr von Resonanzüberhöhungen im Motorsternpunkt gering. Dies ändert sich jedoch, je näher solche Resonanzfrequenzen im Frequenzgang eines Motors gegen Erdpotential in den Bereich von solchen Systemschwingungen des Umrichtersystems gelangen. Dies geschieht in erster Linie durch die Baugröße des Motors selbst. Die Größe eines Motors bedingt die Nutfläche, welche sich ihrerseits auf die Kapazität $C_M$ des Motors gegen Erdpotential auswirkt, indem diese Ableitkapazität mit der Größe der Nutfläche zunimmt. Mit zunehmender Ableitkapazität $C_M$ des Motors wiederum sinkt die ausgeprägte Resonanzfrequenz $f_{res}$ des Amplituden-Frequenzgangs des Motors gegen Erdpotential und kommt somit näher in den Bereich von unerwünschten Systemeigenfrequenzen $f_{sys}$ des Umrichtersystems. Dies hat zur Folge, dass mit zunehmender geometrischer Abmessung des Motors, z.B. der Baulänge oder dem Durchmesser, ausgeprägte Resonanzfrequenzen näher an diesen kritischen Bereich kommen und das Problem von Resonanzüberhöhungen zunimmt.

Dem wirkt die vorliegende Erfindung mit den voranstehend beschriebenen Maßnahmen wirksam und effektiv entgegen, indem ein Weg geschaffen wird, um den Frequenzgang des Motors gegen Erdpotential so zu verändern, dass ausgeprägte Resonanzüberhöhungen $f_{res}$ in der Nähe der Systemeigenfrequenzen $f_{sys}$ des in FIG 1 gezeigten Umrichtersystems in starkem Maße abgeschwächt werden.

Weitere Details und Vorteile der Erfindung ergeben sich anhand der folgenden Darstellung eines vorteilhaften Ausführungsbeispiels und in Verbindung mit den weiteren Figuren. Dabei sind Elemente mit gleicher Funktionalität mit den gleichen Bezugszeichen gekennzeichnet. Es zeigt:

FIG 1   ein Blockschaltbild eines Umrichtersystems mit Drehstrommotor an einem Umrichter mit Spannungszwischenkreis und einem geregelten Eingangsstromrichter sowie Netzeingangsdrossel im Hochsetzstellerbetrieb,

FIG 2   ein Ersatzschaltbild des durch die in FIG 1 gezeigte Anordnung eines Umrichtersystems gebildeten passiven Kreises im Hinblick auf Systemschwingungen,

FIG 3   eine Prinzipskizze einer in einem Motor gebildeten Kettenleiterstruktur,

FIG 4   eine Prinzipskizze zur systemtheoretischen Darstellung des Wirkungspfades der Spannungen gegen Erdpotential vom Netz bis zum Motorsternpunkt,

FIG 5   eine schematische Blockdarstellung einer Topologie in einem Umrichterverband,

FIG 6   eine Prinzipskizze einer symmetrischen Ansteuerung des Motors aus dem Spannungszwischenkreis anhand von zwei Phasen L1 und L2,

FIG 7   ein Zeitdiagramm des Spannungsverlaufs zwischen diesen beiden Phasen L1 und L2 in Gegenüberstellung zu den Schaltzuständen des Wechselrichters W,

FIG 8   ein Zeitdiagramm des Spannungsverlaufs der Phase L1 gegen Erde,

FIG 9   ein entsprechendes Zeitdiagramm des Spannungsverlaufs der Phase L2 gegen Erde,

FIG 10   eine Prinzipskizze einer asymmetrischen Ansteuerung des Motors aus dem Spannungszwischenkreis als Gleichtaktsystem zur Betrachtung Phase gegen Erde,

FIG 11   ein Zeitdiagramm des asymmetrischen Spannungsverlaufs der Phasen L1 und L2 gegen Erde,

FIG 12   ein entsprechendes Zeitdiagramm des Gleichanteils des asymmetrischen Spannungsverlaufs der Phasen L1 und L2 gegen Erde,

FIG 13   ein entsprechendes Zeitdiagramm des Wechselanteils des asymmetrischen Spannungsverlaufs der Phasen L1 und L2 gegen Erde,

FIG 14   einen Amplituden-Frequenzgang eines beliebigen Motors gegen Erde zur Darstellung der Übertragungs-

funktion $H_2(s)$,

FIG 15    einen Amplituden-Frequenzgang eines Motors gegen Erde ohne Berücksichtigung der mit steigender Frequenz zunehmenden Eigendämpfung zur Darstellung der Übertragungsfunktion $H_2(s)$,

FIG 16    eine Prinzipskizze einer Kettenleiterstruktur aus Vierpolen aufgebaut,

FIG 17    ein beispielhaftes Wicklungsschema einer Motorwicklung in Polspultechnologie,

FIG 18    eine Querschnittsansicht der Einbaulage dieser Polspulen im Blechpaket,

FIG 19    das asymmetrische Ersatzschaltbild einer solchen Anordnung nach FIG 17 und FIG 18,

FIG 20    Prinzipskizze einer idealisierten Verlusterzeugung im Motor über die Frequenz,

FIG 21    eine Querschnittsansicht einer Polspulenwicklung auf dem Ständerblech nach FIG 18 mit Beeinflussung der Verluste über die Hauptisolation als kapazitives Element,

FIG 22    Geometrische Veranschaulichung des zu beeinflussenden Verlustfaktors als komplexe elektrische Größe und

FIG 23    einen Vergleich des Amplituden-Frequenzgangs (Amplitudenverlauf über die Frequenz) mit und ohne erfindungsgemäßer gezielter Verlusterzeugung.

Die FIG 1 bis FIG 3 wurden bereits eingangs zur besseren Verständlichkeit der der Erfindung zugrunde liegenden Problematik erläutert, wobei an dieser Stelle noch einmal darauf hingewiesen sein soll, dass bereits das Erkennen der Problematik der Systemschwingungen eines Umrichterssystems nach FIG 1, vor allem mit Netzeingangsdrossel $L_K$ im Hochsetzstellerbetrieb in Verbindung mit einem Motor mit Kettenleiterstruktur K, und deren Ursache aus dem Stand der Technik nicht bekannt sind. Bereits darin ist somit eine erhebliche Leistung der vorliegenden Erfindung zu sehen.

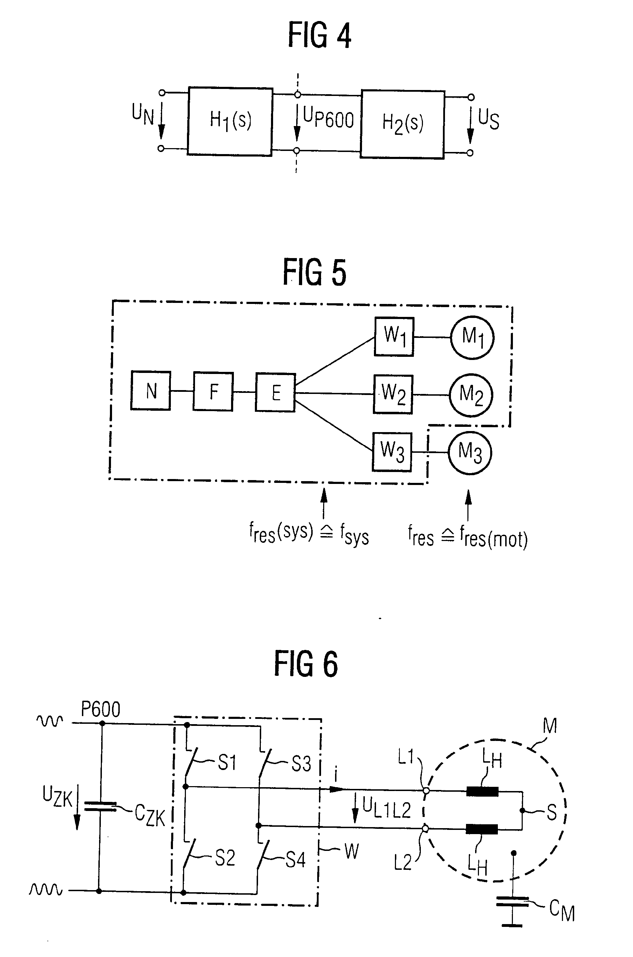

Zunächst soll ein solches in FIG 1 gezeigtes Umrichtersystem systemtheoretisch im Hinblick auf einen Wirkungspfad vom Netz bis zum Motorsternpunkt betrachtet werden. Dazu zeigt FIG 4 eine entsprechende Prinzipskizze mit der eingangsseitigen Netzspannung $U_N$ gegen Erde, die über den Umrichterverband mit einer ersten Übertragungsfunktion $H_1(s)$ in die Spannung $U_{P600}$ der positiven Zwischenkreisschiene gegen Erde umgesetzt wird. Im Motor wird diese Spannung $U_{P600}$ über eine zweite Übertragungsfunktion $H_2(s)$ in eine am Motorsternpunkt S anstehende Spannung $U_s$ gegen Erde umgesetzt.

Dabei ist zu berücksichtigen, dass in der Praxis häufig mehrere Motoren an einem Umrichterverband betrieben werden, indem mehrere Wechselrichter $W_1$ bis $W_3$ mit angeschlossenen Motoren $M_1$ bis $M_3$ aus der Zwischenkreisspannung $U_{ZK}$ gespeist werden. Die Darstellung nach FIG 5 zeigt ein Beispiel einer Topologie eines solchen Umrichterverbands. Aus dem Netz N wird über die Filteranordnung F der Eingangsstromrichter E gespeist, welcher mehrere Wechselrichter $W_1$ bis $W_3$ mit angeschlossenen Motoren $M_1$ bis $M_3$ aus der Zwischenkreisspannung $U_{ZK}$ speist.

Zwischen den jeweiligen Wechselrichtern $W_1$ bis $W_3$ an den angeschlossenen Motoren $M_1$ bis $M_3$ ist hinsichtlich der Systemschwingungen zu berücksichtigen, dass auf Seiten des Umrichterverbands mit N, F, E, $W_1$ bis $W_3$ als Systemeigenfrequenz $f_{sys}$ vorliegt, welche die Resonanzfrequenz $f_{res}(sys)$ des Systems beschreibt. Die Motoren $M_1$ bis $M_3$ hingegen weisen ihrerseits eine eigene Resonanzfrequenz $f_{res}$ auf, die der Eigenfrequenz $f_{res}(mot)$ des jeweiligen Motors entspricht.

Die in FIG 4 angestellte systemtheoretische Betrachtung erfolgt somit getrennt für den jeweiligen Motor, weshalb der Umrichterverband mit der Übertragungsfunktion $H_1(s)$ bei einer Topologie, wie in FIG 5 gezeigt, den Filter F, die Induktivität $L_K$, den Eingangsstromrichter E, alle Wechselrichter W, alle anderen Motoren M sowie alle Leitungen LT umfasst.

In einem solchen oder einem Umrichterverband allgemein kann sich, wie eingangs beschrieben, eine Systemschwingung ausbilden, die insbesondere durch das Takten einer Einspeisung E und in geringerem Maße auch durch das Takten der Wechselrichter W der Achsmodule angeregt wird. Dieses Takten bewirkt ein periodisches Umladen der parasitären Kapazitäten, die bereits anlässlich von FIG 1 beschrieben wurden.

Betrachtet man die Netzspannung $U_N$ als Eingangsgröße, dann wird diese mit der Übertragungsfunktion $H_1(s)$ auf die Ausgangsgröße $U_{P600}$ (bei Betrachtung der positiven Zwischenkreisschiene P600) abgebildet. Die Spannung $U_{P600}$ liegt, bis auf 600V Gleichanteile, gleichtaktig an den Motorklemmen an, was einem asymmetrischen System bzw. Nullsystem entspricht.

Die Motorleitung LT kann theoretisch sowohl $H_1(s)$ als auch $H_2(s)$ zugeordnet werden. Qualitativ gelten die Aussagen für beide Fälle. Hier soll die Motorleitung LT - wie erwähnt - zu $H_1(s)$ gehören. Im betrachteten Frequenzbereich ist die Leitung LT als elektrisch kurz anzusehen.

Wie bereits geschildert, hat der dadurch gebildete und in FIG 2 gezeigte passive Kreis eine natürliche Resonanzfrequenz $f_{res}(sys)$ bzw. $f_{sys}$, auf die sich dieses System einschwingt. Als Folge bekommen die Potenziale der Zwischenkreisschienen P600 und M600 zusätzlich zu den betriebsbedingten Verschiebungen mit beispielsweise 600V Amplitude eine zusätzliche unerwünschte Schwingung mit einer Amplitude von bis zu einigen hundert Volt aufmoduliert.

Dies hat zur Folge, dass die Ausgangsspannungen des Wechselrichters W gegen Erde nicht mehr blockförmig sind, wie dies zwischen zwei Phasen U, V, W der Fall ist, sondern die Ausgangsspannungen stellen Ausschnitte aus den Systemschwingungen auf die Zwischenkreisschienen P600 und M600 dar.

Dies lässt sich am besten veranschaulichen, wenn man die in FIG 6 gezeigte Prinzipskizze einer symmetrischen Ansteuerung des Motors M aus dem Spannungszwischenkreis $C_{ZK}$ anhand von zwei beispielhaften Phasen L1 und L2 zugrunde legt. Es ist der Zwischenkreis mit der Zwischenkreiskapazität $C_{ZK}$ und den Zwischenkreisschienen P600 und M600 gezeigt, aus dem über einen vereinfachten Wechselrichter in Brückenschaltung mit den Schaltern S1 bis S4 eine Spannung $U_{L1L2}$ bzw. ein Strom i zur Speisung zweier im Motorsternpunkt S verbundener Stränge L1 und L2 des Motors M mit jeweiligen Induktivitäten $L_H$ erfolgt. Der Motor weist die bereits erläuterte Ableitkapazität $C_M$ gegen Erdpotenzial auf.

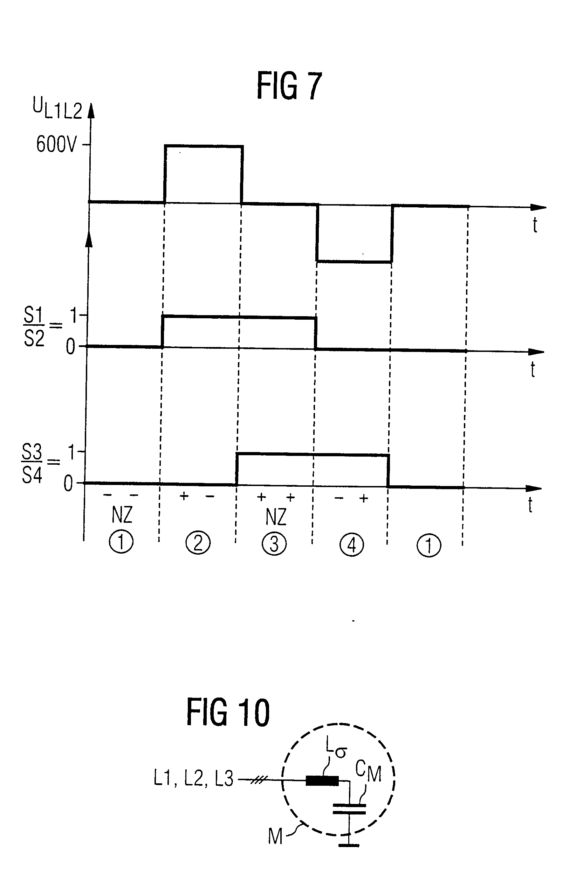

Die Darstellung nach FIG 7 zeigt den Verlauf der Spannung $U_{L1L2}$ zwischen den Phasen L1 und L2 über die Zeit t gegenübergestellt mit den jeweiligen Schaltzuständen der Schalter S1 bis S4 der Brücke des Wechselrichters W, welche darunter ebenfalls über die Zeit t aufgetragen sind. Die Schalter S1 und S2 stellen den ersten Brückenzweig, die Schalter S3 und S4 den zweiten Brückenzweig dar. Dabei sind Schalter einer Phase immer invers zueinander, da andernfalls der Zwischenkreis kurzgeschlossen würde.

Zur Veranschaulichung der Schaltzustände der beiden Brückenzweige S1/S2 und S3/S4 sind die vier Zustände 1, 2, 3 und 4 angenommen. Im Zustand 1 gilt S1=0, S2=1 und S3=0, S4=1 mit dem Zustand ‚--' für die Phasen L1 und L2. In diesem Fall werden also sogenannte Nullzeiger NZ geschaltet und zwischen den Phasen L1 und L2 liegt keine Spannung $U_{L1L2}$ an.

Im Zustand 2 gilt S1=1, S2=0 und S3=0, S4=1. Daraus resultiert der Zustand ‚+-' mit einer Spannung $U_{L1L2}$ von 600V zwischen den Phasen L1 und L2.

Im Zustand 3 gilt S1=1, S2=0 und S3=1, S4=0. Daraus resultiert der Zustand ‚++', es werden also wiederum sogenannte Nullzeiger NZ geschaltet und zwischen den Phasen L1 und L2 liegt keine Spannung $U_{L1L2}$ an.

Im Zustand 4 schließlich gilt S1=0, S2=1 und S3=1, S4=0. Daraus resultiert der Zustand ‚-+' mit einer Spannung $U_{L1L2}$ von -600V zwischen den Phasen L1 und L2. Anschließend beginnt eine neuer Zustand 1 usw..

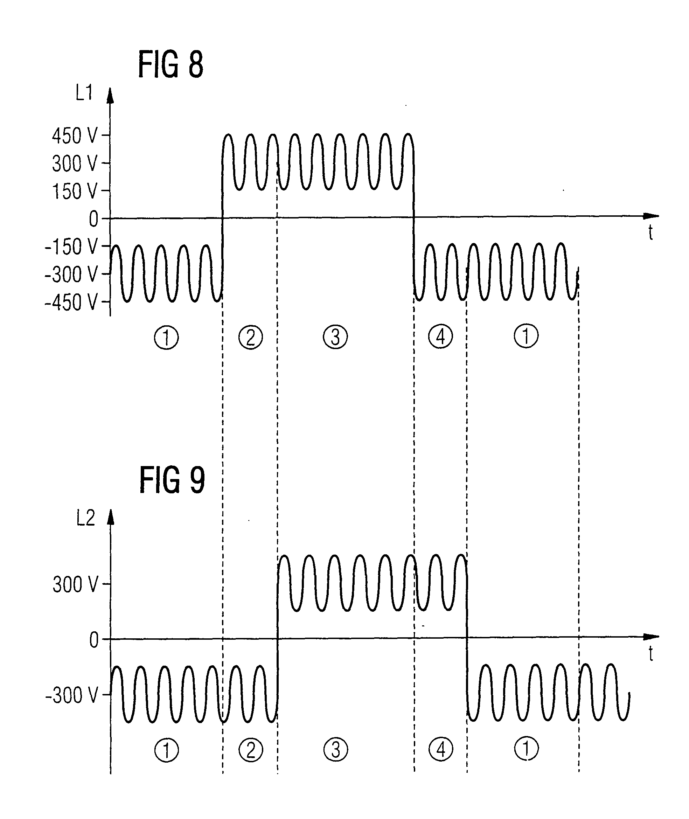

In der Darstellung nach FIG 8 ist ebenfalls für diese Zustände 1 bis 4 der Verlauf der Spannung an der Phase L1 gegen Erde über die Zeit t gezeigt, also asymmetrisch betrachtet. Dabei ist das vorangehend geschilderte Phänomen zu erkennen, wonach der Spannungsverlauf nicht ideal blockförmig ist, sondern die unerwünschten Systemschwingungen des Umrichtersystems aus FIG 1 bzw. FIG 4 mit einer beispielhaften Amplitude von ca. 150V aufmoduliert sind. Das gleiche gilt u.U. mit einer konstanten Amplitudenverschiebung für den asymmetrischen Spannungsverlauf der Phase L2 gegen Erde, der in FIG 9 gezeigt ist. Man erkennt, dass beide Phasen L1 und L2 und damit auch die Zwischenkreisschienen P600 und M600 gleichtaktig schwingen. D.h. diese werden stets "parallel" verschoben, also ohne eine Phasenverschiebung.

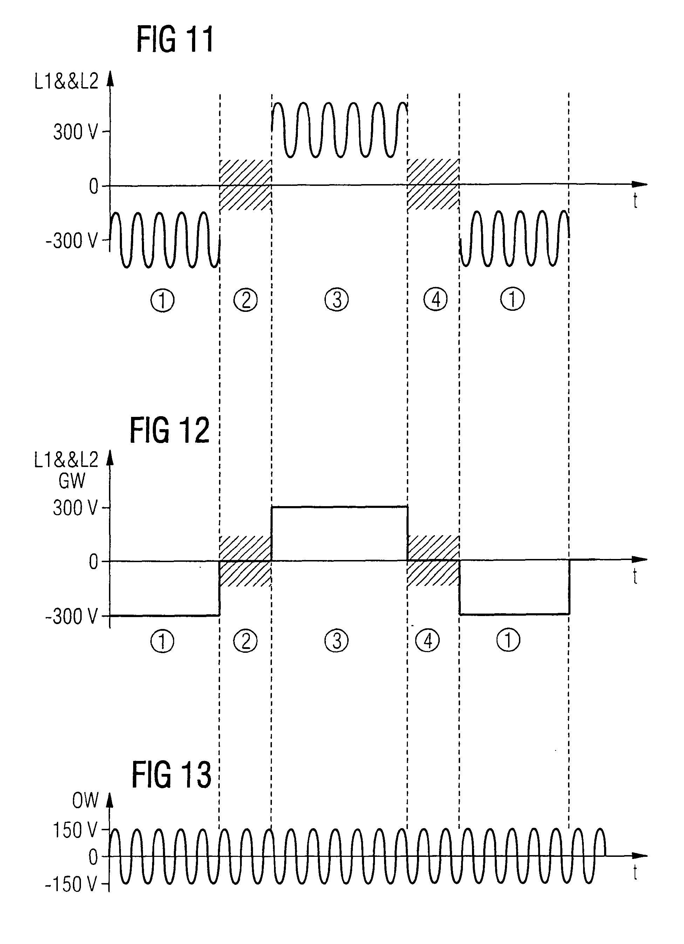

Daran wird deutlich, dass das Problem möglicher Resonanzüberhöhungen im wesentlichen durch asymmetrische Ströme i hervorgerufen wird. Aus diesem Grund lohnt sich die Betrachtung der Anordnung als Gleichtaktsystem, wie diese ausschnittsweise in FIG 10 in Form einer Prinzipskizze einer asymmetrischen Ansteuerung des Motors M aus dem Spannungszwischenkreis $C_{ZK}$ gezeigt ist. Dabei wird somit davon ausgegangen, dass alle Motorphasen U, V, W bzw. L1 bis L3 eine durch die Motorwicklung bedingte Induktivität $L_{\sigma}$ bilden, die durch die Ableitkapazität $C_M$ gegen Erde abgeschlossen wird.

Betrachtet man nun wiederum die beiden Phasen L1 und L2, nunmehr jedoch gemeinsam im Gleichtaktsystem (im folgenden mit L1&&L2 gekennzeichnet), so ergibt sich der in FIG 11 gezeigte Verlauf der Spannung gegen Erde. Aus der aus FIG 6 und FIG 7 erkennbaren "parallelen" Verschiebung der einzelnen Phasen L1, L2 kann im Gleichtaktsystem für L1&&L2 in den Zuständen 2 und 4 kein Gleichtaktsignal skizziert werden, weil hier die Phasen L1 und L2 auf unterschiedlichem Potential liegen (im skizzierten Fall beträgt der Abstand eine Gleichspannung von 600 Volt). Weil nur zwei Phasen betrachtet werden, liegen diese im Mittel gleichtaktig bei 0 Volt. In den übrigen Zuständen 1 und 3 entspricht der Spannungsverlauf von L1&&L2 dem von L1 in FIG 8 und L2 in FIG 9.

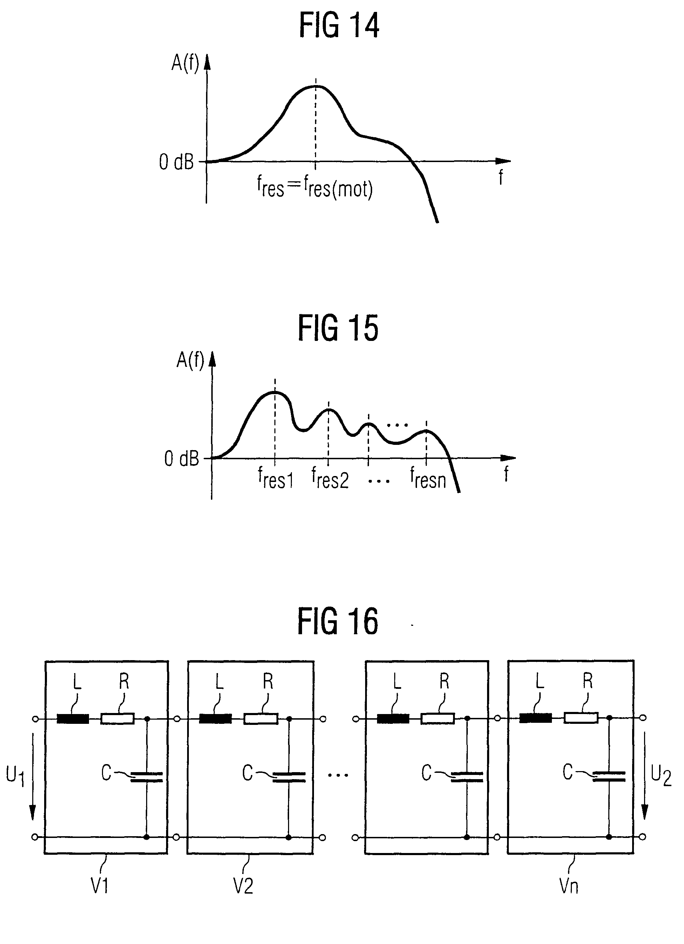

Der in FIG 11 gezeigte Spannungsverlauf von L1&&L2 im Gleichtaktsystem lässt sich dabei in eine Grundwelle GW und eine Oberwelle OW trennen. Diese sind getrennt in FIG 12 und FIG 13 gezeigt.

Aus der Darstellung nach FIG 12 ist der Spannungsverlauf der Grundwelle GW zu entnehmen. Dabei wird deutlich, dass dieser die gewünschten blockförmigen Schaltzustände beschreibt mit - 300V in Zustand 1, 0V in den Zuständen 2 und 4 aufgrund der "parallelen" Verschiebung und +300V im Zustand 3. Die in FIG 13 gezeigte Oberwelle OW des Spannungsverlaufs L1&&L2 beschreibt einen im wesentlichen konstanten sinusförmigen Verlauf mit einer Amplitude von beispielhaft 150V.

Die Oberwelle bzw. Systemschwingung liegt somit in allen Zuständen 1 bis 4 am Motor M an, wodurch dieser Phase-Erde-Schwingkreis, wie in FIG 2 gezeigt, im Motor M ständig angeregt wird. Wenn diese Systemschwingung nun in der Nähe einer Motoreigenfrequenz liegt bzw. der Motor M eine ausgeprägte Resonanz in der Nähe der Frequenz der Systemschwingung aufweist, kann es zu unerwünschten Resonanzüberhöhungen kommen. Ein "maximales" Aufschwingen dieses Phase-Erde-Schwingkreises wird in der Regel lediglich durch die Brüche in der Oberwelle aufgrund des Schaltens von einem Zustand in den nächsten verhindert.

Im Hinblick auf die vorangehend erwähnte systemtheoretische Betrachtung der Problematik nach FIG 4 hängt die Amplitude einer solchen Systemschwingung $f_{sys}$ dabei im wesentlichen von zwei Faktoren ab. Dies ist zum einen die intrinsische Dämpfung im System, die umgekehrt proportional zur Güte des Schwingkreises ist, wobei die Dämpfung mit steigender Frequenz zunimmt. Zum anderen ist es die Anregung, d.h. die Art der Einspeisung (z.B. Diodeneinspeisung oder geregelte Einspeisung) und die Höhe der Zwischenkreisspannung $U_{ZK}$.

Besonders ausgeprägte Systemeigenschwingungen lassen sich damit bei Umrichtersystemen beobachten, die viele Achsmodule W und Motoren M sowie lange Motorleitungen LT haben.

Der Frequenzbereich der Systemeigenschwingungen $f_{sys}$ reicht dabei in der Regel von ca. 10kHz für große Umrichtersysteme bis über 50kHz für kleinere Umrichtersysteme.

Amplitude und Frequenz hängen somit von der Konfiguration und dem Ausbaugrad des Systems ab, z.B.:

- Art der Einspeisung E (geregelt oder ungeregelt)
- Anzahl der Achsen bzw. Motoren M, die an einem Umrichtersystem UR betrieben werden
- Länge der Leistungsleitungen LT

Es bleibt somit an dieser Stelle festzuhalten, dass Umrichtersysteme mit Spannungszwischenkreis Eigenschwingungen der Zwischenkreisschienen P600, M600 gegen Erde aufweisen können. Diese sind besonders ausgeprägt bei mehrachsigen Systemen und bei geregelten Netzeinspeisungen im Eingangsstromrichter E, vor allem im Hochsetzstellerbetrieb. Damit wird der Motor M im asymmetrischen System unabhängig von den Pulsmustern der einzelnen Phasen U, V, W bzw. L1 bis L3 nahezu monofrequent angeregt. Mit der Übertragungsfunktion $H_2(s)$ wird diese Anregung auf die Ausgangsseite, nämlich die Spannung $U_s$ am Sternpunkt S gegen Erde, abgebildet.

Alle elektrischen Motoren M, gleich welcher Bauform, haben qualitativ den in der Darstellung nach FIG 14 gezeigten Amplituden-Frequenzgang A(f) ihrer Übertragungsfunktion $H_2(s)$ gegen Erde. Dieser weist eine ausgeprägte Resonanzfrequenz $f_{res}(mot)$ bzw. $f_{res}$ auf. Die Übertragungsfunktion $H_2(s)$ kann dabei beschrieben werden als:

$$H_2(s) = U_{P600} / U_S.$$

Die Frequenz der ausgeprägten Resonanzüberhöhung des Motors hängt von den induktiven und kapazitiven Elementen im Motor gegen Erde ab und bestimmt sich damit nach:

$$f_{res} \propto \frac{1}{\sqrt{L_M \cdot C_M}}$$

mit $L_M = f(L_{PE})$ als wirksamer Induktivität und $C_M = f(C_{PE})$ als wirksamer Kapazität des Motors M gegen Erdpotential PE bzw. im Nullsystem. Die genauen Funktionen hängen dabei vom jeweiligen Messverfahren und den verwendeten Ersatzschaltbildern ab.

Bei mehreren Sternpunkten S liegt eine Parallelschaltung identischer Schwingkreise vor. Die Kapazität pro Schwingkreis bestimmt sich dabei nach:

$$\widetilde{C} \propto \frac{C_M}{Anz_S} \quad .$$

Die Induktivität hängt von der Anzahl der in Reihe geschalteten Spulen ab, wobei vor allem in der Polspultechnik mehrere Sternpunkte S vorkommen. Da die einzelnen Spulen als magnetisch voneinander entkoppelt angesehen werden können, gilt ferner:

$$\widetilde{L} \propto \frac{n_{1S}}{Anz_S}$$

mit $n_{1S}$ als Anzahl der Spulenbaugruppen bei einem Sternpunkt S und $Anz_S$ der Anzahl der Sternpunkte S.

Damit gilt für Motoren gleicher Baugröße, aber unterschiedlicher Verschaltung identischer Spulengruppen:

$$f_{res} \propto \frac{1}{\sqrt{\frac{1}{Anz_s} \cdot \frac{1}{Anz_s}}} \propto Anz_s \, .$$

Der Einfluss der Motorgröße auf die Resonanzfrequenz $f_{res}$ kann folgendermaßen abgeschätzt werden:

$$C = \frac{\varepsilon \cdot A}{d}$$

mit

$$A \propto Nutfläche \propto D \cdot LG,$$

wobei D den Durchmesser und LG die Länge des Motors darstellen.

Damit gilt für den Einfluss der Motorgröße bei ansonsten konstanten Eigenschaften:

$$f_{res} \propto \frac{1}{\sqrt{Nutfläche}} \propto \frac{1}{\sqrt{D \cdot LG}} \, .$$

Ohne Berücksichtigung der mit steigender Frequenz f zunehmenden Eigendämpfung aufgrund von Wirbelstromverlusten, Ummagnetisierungen etc. und insbesondere, wenn der Motor M als Kettenleiter K verstanden wird, was vor allem bei Motoren in Polspultechnologie aufgrund der in Reihe geschalteten Spulengruppen makroskopisch plausibel erscheint, ergibt sich der in FIG 15 gezeigte Amplituden-Frequenzgang A(f). Dieser weist mehrere lokale Maxima auf, welche mehrere Resonanzfrequenzen $f_{res\,1}$ bis $f_{res}$ n beschreiben, wobei die erste Resonanzüberhöhung $f_{res\,1}$, die bei der niedrigsten Frequenz liegt, dominant ist und damit die bestimmende bzw. ausgeprägte Resonanzfrequenz $f_{res}$ darstellt.

Es existieren somit Frequenzen, insbesondere die niedrigste Resonanzfrequenz $f_{res}$, bei denen am Motorsternpunkt S wesentlich höhere Spannungen auftreten als an den Eingangsklemmen des Motors M, die beispielsweise um den Faktor 3 bis 4 höher liegen. Dabei ist festzustellen, dass die Resonanzüberhöhung umso höher ist, je niedriger $f_{res}$ liegt. Besonders gefährdet sind somit geometrisch große Torquemotoren, bei denen sich über die Nutfläche und mehrere Sternpunkte S besonders leicht Resonanzstellen $f_{res}$ bilden lassen, die in der Nähe oder genau auf der Frequenz $f_{sys}$ der Systemeigenschwingungen liegen.

Diese Erkenntnisse sind bedeutsam, wenn man sich die Kettenleiterstruktur K vor Augen hält, wie sie in FIG 3 gezeigt ist. Eine solche kann nämlich nicht nur makroskopisch bei Motoren in Polspultechnologie angenommen werden, sondern im Prinzip auch bei anderen Bauformen. Dazu kann man den Motor M mit seiner Motorwicklung auch ganz allgemein als einen aus gleichen Vierpolen V1 bis Vn zusammengesetzten mikroskopischen Kettenleiter K betrachten, wie er in der Darstellung nach FIG 16 gezeigt ist. Jeder Vierpol V1 bis Vn umfasst dabei eine Induktivität L, die mit einem ohmschen Widerstand R in Reihe geschaltet ist. Die Ausgangsspannung fällt dabei parallel zu einer Kapazität C ab, die mit L und R als Spannungsteiler geschaltet ist.

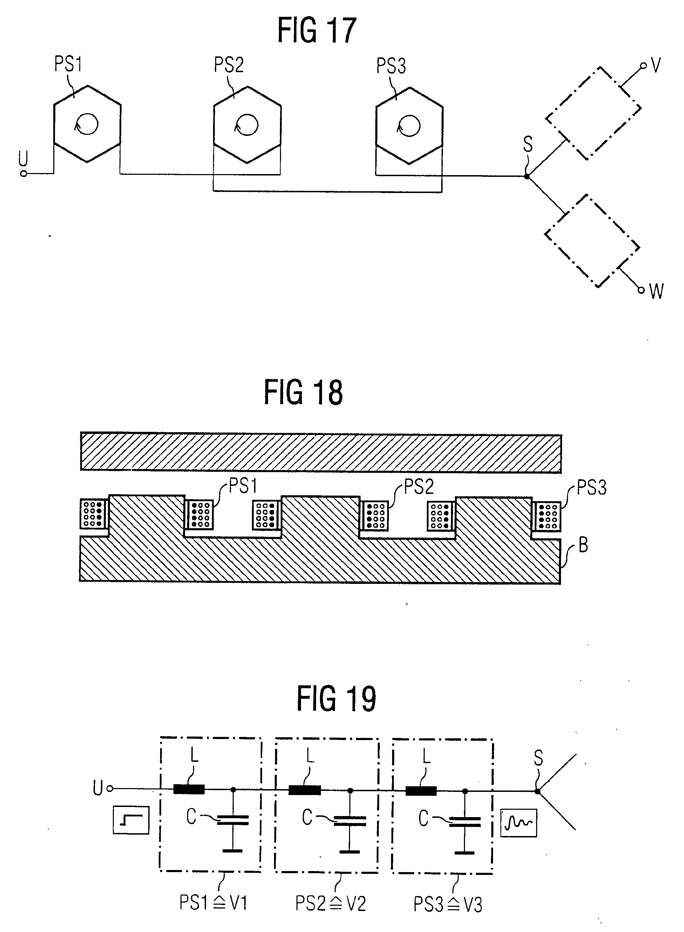

Zur Verdeutlichung dieses Aufbaus soll zunächst noch einmal näher auf die Kettenleiterstruktur K eingegangen werden. Dazu ist in den FIG 17 bis 19 der Aufbau einer Motorwicklung in Polspultechnologie deren asymmetrischem elektrischen Ersatzschaltbild gegenübergestellt. In der Darstellung nach FIG 17 ist beispielhaft eine Spulengruppe in der Phase U gezeigt. Eine jede Spulengruppe der Motorwicklung MW, bestehend aus mehreren hintereinandergeschalteten Polspulen PS1 bis PS3, sofern es sich um einen Aufbau in Polspultechnik handelt, bildet bezüglich Erde einen makroskopischen LC-Kettenleiter mit einer Induktivität L und einer Kapazität C. Anfang und Ende dieses Kettenleiters K sind Eingangsklemme und Sternpunkt S des Motors M. Dieser Kettenleiter K hat, wie vorangehend dargestellt, mehrere Resonanzfrequenzen $f_{res}$.

Wird ein solcher Kettenleiter am Anfang (Phase gegen Erde) z.B. sinusförmig mit seiner niedrigsten Eigenfrequenz $f_{res}$ erregt, welche in der Regel am ausgeprägtesten ist, so kann er am Ende (Sternpunkt S gegen Erde) eine wesentlich höhere Spannung liefern als am Anfang. Diese Spannung kann im ungünstigsten Fall bis zum Durchschlag der Hauptisolation in der Nähe des Sternpunkts S führen.

Eine solche sinusförmige Erregung kann vor allem durch eine im vorangehenden beschriebene ungewollte Systemschwingung $f_{sys}$ des gesamten Umrichtersystems erfolgen, welche den ge-wollten Schaltvorgängen in den Leistungsteilen überlagert ist.

Der beschriebene Mechanismus ist am deutlichsten im Stillstand ausgeprägt, da hier alle Phasen U, V, W bzw. L1, L2, L3 gleichzeitig geschaltet werden. Die Eigenfrequenzen und Dämpfungen des Kettenleiters K hängen von Aufbau der Motorwicklung ab, z.B. von:

- der Anzahl der Spulen pro Zweig
- der Windungszahl (Induktivität)
- der Gestalt der Spulen (Kapazität)
- dem Verguss (Kapazität)

Die Darstellung nach FIG 18 verdeutlicht, wie aus einem beispielhaften Wicklungsschema nach FIG 17 und der Einbaulage der Polspulen im Blechpaket B das asymmetrische Ersatzschaltbild einer solchen Anordnung nach FIG 19 hervorgeht.

Durch die geordnete Wicklung hat die erste Lage (gekennzeichnet durch ausgefüllte Kreise) einer Polspule PS1 bis PS3 stets eine größere Kapazität C gegenüber dem Blechpaket B (Erdpotential) als die übrigen Lagen (gekennzeichnet durch nicht ausgefüllt Kreise).

Die jeweilige Induktivität L wird durch die jeweilige Polspule PS1, PS2, PS3 selbst gebildet, wobei angenommen wird, dass die Gegeninduktivität zwischen den Spulen zunächst vernachlässigt werden kann, da bei den betrachteten Frequenzen (z.B. 20 kHz) das Eisen den magnetischen Fluss nur noch wenig verstärkt und lenkt. Dies wird dadurch bestätigt, dass das Weglassen des Sekundärteils die Messwerte (Frequenz, Amplitude) kaum verändert.

Die gezeigte Struktur besitzt so viele Kettenleiterglieder (n = 3) wie Polspulen PS1 bis PS3. Besteht ein Strang aus m parallelgeschalteten Zweigen (Kettenstrukturen), so sind für den Betrieb mit Nullzeiger NZ (gleichzeitiges Schalten aller Eingangsklemmen) für die Phasen U, V, W somit m = 3 Zweige parallel geschaltet.

In FIG 19 nicht eingezeichnet ist die im System vorhandene Dämpfung. Sie soll zunächst als ohmscher Widerstand R einer jeden Induktivität L angesehen werden.

Im folgenden Beispiel wird für einen Motor M mit Hilfe der Größen $L_Z$, $C_M$, m und n die Übertragungsfunktion der in FIG 16 gezeigten Kettenleiterstruktur aus Vierpolen V1 bis Vn von den Phasenklemmen zum Sternpunkt S berechnet.

Dabei wird mit $C_M$ die Wicklungs-Erd-Kapazität sowie mit $L_Z, R_Z$ die Impedanz eines Wicklungszweigs beschrieben. Unter einem Wicklungszweig werden in diesem Fall die hintereinandergeschalteten Spulen von einer Phasenklemme U, V oder W bis zu einem Sternpunkt S verstanden, wobei eventuell vor-handene Parallelschaltungen innerhalb eines Strangs abge-trennt sind.

Daraus lassen sich die Parameter eines Kettenleiterglieds bzw. Vierpols folgendermaßen bestimmen:

$$L = \frac{L_z}{n}$$

$$C = \frac{C_M}{3 \cdot n \cdot m}$$

m: Anzahl der parallelen Zweige
n: Anzahl der Spulen in Reihe

Für den Verlustwiderstand R der Induktivität L wird zunächst $R = \frac{R_Z}{n}$ gesetzt, wobei der Wert für $R_Z$ im Reihenmodell beispielsweise bei 10kHz ermittelt wird.

Dieser Wert kann nur ein erster Anhaltspunkt sein, da R stark frequenzabhängig ist, und bei einer tieferen Frequenz als den tatsächlich auftretenden Frequenzen ermittelt wird.

Die Z-Matrix eines einzelnen Vierpol-Glieds $\underline{Z}_V$ lautet:

$$\underline{Z}_V = \begin{bmatrix} R + sL + \dfrac{1}{sC} & \dfrac{1}{sC} \\ \dfrac{1}{sC} & \dfrac{1}{sC} \end{bmatrix}$$

Daraus lässt sich die Kettenmatrix $\underline{A}_V$ bilden:

$$\underline{A}_V = \begin{bmatrix} s^2 LC + sRC + 1 & sL + R \\ sC & 1 \end{bmatrix}$$

Die A-Matrix des gesamten Kettenleiters K ist dann:

$$\underline{A}_{ges} = \underline{A}_V{}^n$$

mit dem Element

$$\underline{A}_{ges}[1,1] = \frac{\underline{U}_1}{\underline{U}_2}$$

Damit ist der Amplituden-Frequenzgang A(s) als komplexe Verallgemeinerung von A(f):

$$A(s) = 20 \lg \left( \left| \frac{1}{\underline{A}_{ges}[1,1]} \right| \right) \quad \text{in dB}$$

Nimmt man an, dass der Dämpfungswiderstand R mit der Frequenz zunimmt, so würden die höheren Resonanzfrequenzen noch stärker gedämpft.

Bildet man aus der A-Matrix des gesamten Kettenleiters K die Z-Matrix so ist das Element $Z_{in}$ gleich der Eingangsimpedanz des Kettenleiters.

Daraus ergibt sich die Eingangsimpedanz:

$$Z_{in} = \left| \frac{\underline{Z}_{ges}[1,1]}{m \cdot n} \right| = \frac{1}{m \cdot n} \cdot \left| \frac{\underline{A}_{ges}[1,1]}{\underline{A}_{ges}[2,1]} \right|$$

Die Erfindung wirkt dem nun dadurch entgegen, dass im Motor gezielt Verluste erzeugt werden, die einen solchen geschilderten parasitären Schwingkreis gegen Erde im Bereich kritischer Resonanzfrequenzen $f_{res}$ bedämpfen. Dies betrifft vor allem den Frequenzbereich ab 10kHz. Dabei sollen die Vorgänge im Wirksystem (also in den einzelnen Phasen U, V, W und nicht im Nullsystem) und insbesondere im Bereich der Betriebsfrequenzen möglichst wenig beeinträchtigt werden.

Übliche Betriebsfrequenzen liegen dabei im Frequenzbereich zwischen 0 und 400 Hz. Oberwellen mit höherer Energie entstehen im Bereich der Taktfrequenz oder im Bereich der doppelten Frequenz in Folge der Anregung. Diese Taktfrequenz liegt üblicherweise zwischen 1-2 kHz und 16 kHz. Bei mehrachsigen Antriebssystemen mittlerer Leistung (z.B. 16 kW - 120 kW Einspeiseleistung) liegt diese Frequenz ca. bei 4 kHz.

Idealerweise ist damit eine Verlusterzeugung im Motor im Stromkreis gegen Erdpotential im Bereich der Betriebsfrequenzen $f_{betr}$ nahezu Null und im Bereich der parasitären Systemeigenfrequenzen $f_{sys}$ hoch.

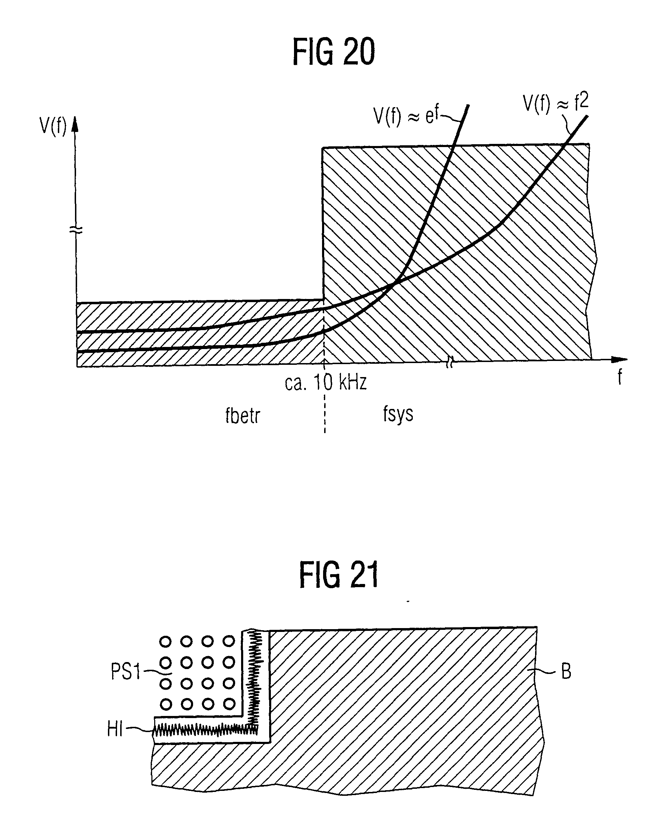

Die Darstellung nach FIG 20 zeigt dazu den Verlauf einer solchen idealen Verlusterzeugung, wobei der Verlust V(f) über die Frequenz f aufgetragen ist. Erst ab einem kritischen Wert von beispielsweise ca. 10 kHz sollen die Verluste stark ansteigen.

In der Realität lassen sich solche Verläufe der Verlusterzeugung nur annähernd erreichen, wobei quadratische ($V(f) = f^2$) oder exponentielle ($V(f) = e^f$) Verläufe in den beteiligten Komponenten auftreten. Verluste können dabei vor allem durch die Wahl geeigneter Materialien, insbesondere Ständermaterialien, gezielt erzeugt werden. Dabei bieten sich vor allem kapazitive und induktive Elemente an.

Gezielte Verluste in kapazitiven Elementen lassen sich erfindungsgemäß vor allem durch dielektrische Verluste erzeugen. Solche dielektrischen Materialien werden in der Drahtisolation, der Phasenisolation und in der Hauptisolation, vor allem in der Nutkastenauskleidung, eingesetzt.

Für Stromkreise gegen Erde rückt nach der Erfindung vor allem die Hauptisolation HI in den Vordergrund. Die FIG 21 zeigt eine solche für eine exemplarische Nutkastenauskleidung mit einer Polspulwicklung PS1 in Form einer Querschnittansicht durch das geerdete Ständerblechpaket B. Strom fließt hier als sogenannter kapazitiver Verschiebestrom beim Umladen der weiter vorne beschriebenen parasitären Erdkapazitäten.

Die Hauptisolation HI weist dabei ein Dielektrikum mit einer Dicke d und mit einer relativen Dielektrizitätskonstante $\varepsilon_r$ auf. Die durch eine solche Hauptisolation HI gebildete Kapazität gegen Erde beträgt dabei

$$C = \frac{\varepsilon_0 \cdot \varepsilon_r \cdot A}{d}$$

mit A als Nutfläche.

Die Dicke d der Hauptisolation HI soll dabei nach Möglichkeit klein sein, um die maximale Füllung der Nuten mit Wicklungssträngen zu erlauben. Somit empfiehlt es sich, die relative Dielektrizitätskonstante $\varepsilon_r$ zu verändern. Diese lässt sich als komplexe elektrische Größe wie folgt beschreiben:

$$\underline{\varepsilon}_r = \varepsilon'_r - j\, \varepsilon''_r.$$

Daraus lässt sich ableiten:

$$\underline{G} = (\chi + j\omega\, \varepsilon_0\, \underline{\varepsilon}_r) * \underline{E} =$$

$$(\chi + j\omega\, \varepsilon_0\, \varepsilon'_r) * \underline{E} \qquad \text{(ohmscher Anteil)}$$

$$+ \quad (\chi + j\omega\, \varepsilon_0\, \varepsilon''_r) * \underline{E} \qquad \text{(kapazitiver Anteil)}$$

mit

$\underline{G}$: Stromdichte im Leiter
$\underline{E}$: elektrische Feldstärke
$\chi$: spezifische Leitfähigkeit, die bei Dielektrika Null beträgt.

Der durch Beeinflussung der relativen Dielektrizitätskonstante $\varepsilon_r$ erzielbare Verlustfaktor bemisst sich somit zu

$$\tan\delta = \frac{\chi + j\omega \cdot \varepsilon_0 \cdot \varepsilon''_r}{\omega \cdot \varepsilon_0 \cdot \varepsilon'_r} \approx \frac{\varepsilon''_r}{\varepsilon'_r}$$

unter der Bedingung, dass die spezifische Leitfähigkeit $\chi$ bei Dielektrika Null beträgt.

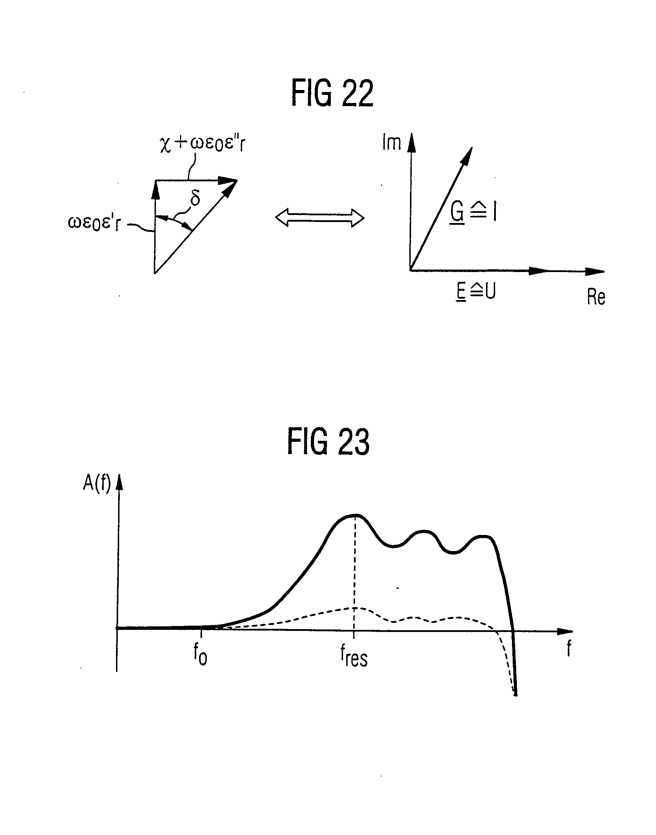

Dieser mathematische Zusammenhang ist in FIG 22 geometrisch veranschaulicht durch ein Zeigerdiagramm und das korrespondierende komplexe Koordinatensystem mit Realteil Re und Imaginärteil Im.

Dieser Verlustfaktor $\tan\delta$ wird üblicherweise zur Beschreibung verlustbehafteter Dielektrika benutzt. Damit wird ein möglicher Weg zur gezielten Erzeugung von passenden frequenzabhängigen Verlusten nach der Erfindung deutlich. Durch Wahl geeigneter Dielektrika im Hinblick auf materialtechnische und werkstoffwissenschaftliche Aspekte lassen sich damit Verlustfaktoren $\tan\delta$ erzeugen, die an die in FIG 20 gezeigte gewünschte Situation heranreichen.

Ein anderer vorteilhafter Ansatz der Erfindung besteht in der Auswahl und Dimensionierung passender induktiver Elemente für den Motor M. Dabei steht im wesentlichen das magnetische Kernmaterial(z.B. das Ständerblech B) im Blickpunkt. Dies kann durch eine gezielte Herbeiführung von Verlusten im oberen Frequenzbereich bei $f_{res}$ durch eine neue Auslegung des Motors erreicht werden. Dabei spielen Hystereseverluste und Wirbelstromverluste eine Rolle.

Da Hystereseverluste grundsätzlich proportional mit der Frequenz zunehmen, was durch das Ummagnetisieren des Materials und die dabei ablaufenden mikroskopischen Vorgänge (Verschiebung der Weiß'schen Bezirke und der Blochwände) bedingt ist, ist diese Verlustart für den Zweck der Erfindung (FIG 20) nicht vorteilhaft.

Jedoch eignen sich die Wirbelstromverluste. Diese nehmen für niedrige Frequenzen (Bereich der kritischen Systemeigenfrequenzen $f_{sys}$) quadratisch mit der Frequenz f und der Blechdicke d zu entsprechend

$$Pw \approx f^2 * d^2.$$

Bei sehr viel höheren Frequenzen hingegen macht sich die Stromverdrängung nach dem Skineffekt in Richtung der Blechoberfläche bemerkbar, so dass in diesem Fall die Verluste nur noch proportional mit der Frequenz f steigen.

Damit eignen sich solche Wirbelstromverluste besser zur gezielten Verlusterzeugung in dem in FIG 20 gezeigten Frequenzbereich. Dies kann beispielsweise durch gezielte Verwendung von dickeren Ständerblechen erfolgen, obwohl dies auch im Bereich der Betriebsfrequenzen prinzipiell unerwünschte Auswirkungen hat, weil damit die Verluste (und damit die Dämpfung) im Bereich der Systemeigenfrequenzen steigen, was als positiver Effekt überwiegen kann.

Aus der Darstellung nach FIG 23 ist der Amplituden-Frequenzgang A(f) gegen Erdpotential mit und ohne erfindungsgemäßer gezielter Verlusterzeugung durch die im vorangehenden dargestellten Maßnahmen ersichtlich. Der ungedämpfte Verlauf entspricht dem in FIG 15 gezeigten mit der ersten Resonanzfrequenz als ausgeprägtester Resonanzfrequenz $f_{res}$. Mit erfindungsgemäßer Bedämpfung der unerwünschten Gleichtaktvorgänge, wie vorangehend beschrieben, ergibt sich der punktierte Verlauf, wo die Resonanzüberhöhung bei $f_{res}$ wesentlich geringer ist. Sollte diese also in der Nähe der Systemeigenfrequenz $f_{sys}$ des Umrichtersystems liegen, so sind keine Resonanzüberhöhungen mit den geschilderten negativen Folgen zu erwarten.

Vorteile der Erfindung sind zum einen eine Entlastung des Isoliersystems gegen Erde, was die Zuverlässigkeit und Robustheit des Motors steigert. Zum anderen können teure und die Auslastung des Motors verringernde Zusatzisolierungen im Motor entfallen, weil die Spannungsbelastung in Bereichen bleibt, die nach heutigem Stand der Technik bei Niederspannungsmotoren als mit Standardwerkstoffen beherrschbar gelten.

Das gleiche Prinzip kann auch bei mehreren Motorsternpunkten S angewandt werden, wie es z.B. in Linearmotoren oder Torquemotoren der Fall ist. Im Prinzip sind Resonanzüberhöhungen auch bei Motoren in sog. wilder Wicklung (Standard bei Niederspannungsmotoren) vorhanden, so dass die Erfindung sinngemäß auch für diese und andere Motoren als die zur Veranschaulichung gewählten Motoren in Polspultechnologie einsetzbar ist.

**Patentansprüche**

1. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), zu betreibenden elektrischen Motor (M), der aufgrund von Eigenschaften seiner Wicklungsstränge einen Frequenzgang mit mindestens einer Resonanzfrequenz ($f_{res}$) gegen Erdpotential aufweist, indem für den Ständer im Motor solche Materialien eingesetzt werden, die eine erhöhte Verlusterzeugung im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, mit sich bringen.

2. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), zu betreibenden elektrischen Motor (M), der aufgrund von Eigenschaften seiner Wicklungsstränge einen Frequenzgang mit mindestens einer Resonanzfrequenz ($f_{res}$) gegen Erdpotential aufweist, insbesondere nach Anspruch 1, indem in den kapazitiven Elementen des Motors im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, erhöhte Verluste erzeugt werden.

3. Verfahren zur Bedämpfung von Resonanzüberhöhungen nach Anspruch 1 oder 2, wobei die Verluste durch verlustbehaftete dielektrische Materialien mit einer relativen Dielektrizitätskonstante ($\varepsilon_r$) mit einem entsprechenden frequenzabhängigen Verlustfaktor (tan$\delta$) erzeugt werden.

4. Verfahren zur Bedämpfung von Resonanzüberhöhungen nach Anspruch 3, wobei entsprechende dielektrische Materialien für die Hauptisolation, insbesondere in der Nutkastenauskleidung des Motorständers, eingesetzt werden.

5. Verfahren zur Bedämpfung von Resonanzüberhöhungen nach Anspruch 3 oder 4, wobei entsprechende dielektrische Materialien für die Drahtisolation und/oder Phasenisolation eingesetzt werden.

**6.** Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), zu betreibenden elektrischen Motor (M), der aufgrund von Eigenschaften seiner Wicklungsstränge einen Frequenzgang mit mindestens einer Resonanzfrequenz ($f_{res}$) gegen Erdpotential aufweist, insbesondere nach Anspruch 1, indem in den induktiven Elementen des Motors im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, erhöhte Verluste erzeugt werden.

**7.** Verfahren zur Bedämpfung von Resonanzüberhöhungen nach Anspruch 1 oder 6, wobei gezielt entsprechende frequenzabhängige Wirbelstromverluste (Pw) im Kernmaterial des Motors erzeugt werden.

**8.** Verfahren zur Bedämpfung von Resonanzüberhöhungen nach Anspruch 7, wobei die Dicke (d) der Ständerbleche des Motors soweit erhöht wird, bis darin ausreichende frequenzabhängige Wirbelstromverluste (Pw) im Bereich kritischer Systemschwingungen ($f_{sys}$) erzeugt werden.

**9.** Elektrischer Motor zum Betrieb an einem Spannungszwischenkreis-Umrichter (UR) mit eingangsseitiger Induktivität, insbesondere einer Netzeingangsdrossel ($L_K$), mit einem durch Wicklungsinduktivitäten (L) und Ableitkapazitäten (C) bedingten Frequenzgang mit ausgeprägter Resonanz ($f_{res}$) gegen Erdpotential, wobei der Motor solche Ständermaterialien aufweist, die erhöhte Verluste im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, erzeugen.

**10.** Elektrischer Motor zum Betrieb an einem Spannungszwischenkreis-Umrichter (UR) mit eingangsseitiger Induktivität, insbesondere einer Netzeingangsdrossel ($L_K$), mit einem durch Wicklungsinduktivitäten (L) und Ableitkapazitäten (C) bedingten Frequenzgang mit ausgeprägter Resonanz ($f_{res}$) gegen Erdpotential, insbesondere nach Anspruch 9, wobei der Motor solche kapazitive Materialien aufweist, die erhöhte Verluste im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, erzeugen.

**11.** Elektrischer Motor nach Anspruch 9 oder 10, wobei verlustbehaftete dielektrische Materialien mit einer relativen Dielektrizitätskonstante ($\underline{\varepsilon}_r$) mit einem entsprechenden frequenzabhängigen Verlustfaktor (tanδ) vorgesehen sind.

**12.** Elektrischer Motor nach Anspruch 11, wobei entsprechende dielektrische Materialien für die Hauptisolation, insbesondere in der Nutkastenauskleidung des Motorständers, vorgesehen sind.

**13.** Elektrischer Motor nach Anspruch 11 oder 12, wobei entsprechende dielektrische Materialien für die Drahtisolation und/oder Phasenisolation vorgesehen sind.

**14.** Elektrischer Motor zum Betrieb an einem Spannungszwischenkreis-Umrichter (UR) mit eingangsseitiger Induktivität, insbesondere einer Netzeingangsdrossel ($L_K$), mit einem durch Wicklungsinduktivitäten (L) und Ableitkapazitäten (C) bedingten Frequenzgang mit ausgeprägter Resonanz ($f_{res}$) gegen Erdpotential, insbesondere nach Anspruch 9, wobei der Motor solche induktive Materialien aufweist, die erhöhte Verluste im Bereich von asymmetrisch gegen Erdpotential anregenden Systemschwingungen ($f_{sys}$) des Umrichtersystems ($L_K$, UR, L, M), insbesondere im Frequenzbereich oberhalb von 10 kHz, erzeugen.

**15.** Elektrischer Motor nach Anspruch 9 oder 14, wobei der Motor solches Kernmaterial aufweist, das entsprechende frequenzabhängige Wirbelstromverluste (Pw) erzeugt.

**16.** Elektrischer Motor nach Anspruch 15, wobei die Ständerbleche des Motors eine Dicke aufweisen, die darin ausreichende frequenzabhängige Wirbelstromverluste (Pw) im Bereich kritischer Systemschwingungen ($f_{sys}$) gewährleistet.

**17.** Elektrischer Motor nach einem der Ansprüche 9 bis 16 mit Wicklungssträngen in Polspultechnik, die jeweils eine Kettenleiterstruktur (K) aus Induktivitäten (L) und Ableitkapazitäten (C) bilden, wobei die mittels der verwendeten Ständermaterialien erzeugten Verluste zur Bedämpfung dieser Kettenleiterstrukturen (K) dienen.

**18.** Elektrischer Motor nach einem der Ansprüche 9 bis 16, wobei die verwendeten Ständermaterialien so ausgeprägt sind, dass diese an den Motorphasen (U, V, W) asymmetrisch gegen Erde anregende Gleichtaktströme des Umrichtersystems ($L_K$, UR, L, M) in der Kettenleiterstruktur (K) bedämpfen.

**19.** Elektrischer Antrieb nach einem der Ansprüche 9 bis 16 in sogenannter wilder Wicklungstechnik, insbesondere Niederspannungsmotor, der aufgrund seines geometrischen und/oder elektrischen Aufbaus niedrige Resonanzfrequenzen aufweist.

## FIG 1

## FIG 2

## FIG 3

# FIG 4

$U_N \downarrow$  | $H_1(s)$ |  $\downarrow U_{P600}$  | $H_2(s)$ |  $\downarrow U_S$

# FIG 5

| N | — | F | — | E |

$W_1$ — $M_1$

$W_2$ — $M_2$

$W_3$ — $M_3$

$f_{res}(sys) \triangleq f_{sys}$ $\qquad$ $f_{res} \triangleq f_{res(mot)}$

# FIG 6

P600

$U_{ZK} \downarrow$ $C_{ZK}$

S1 $\quad$ S3

S2 $\quad$ S4 — W

$i$

$\downarrow U_{L1L2}$

L1

L2

$L_H$

$L_H$

M

S

$C_M$

# FIG 7

# FIG 10

FIG 8

FIG 9

## FIG 11

## FIG 12

## FIG 13

# FIG 14

# FIG 15

# FIG 16

# FIG 17

PS1  PS2  PS3

U

S

V

W

# FIG 18

PS1  PS2  PS3

B

# FIG 19

L  L  L  S

U

C  C  C

PS1 ≙ V1    PS2 ≙ V2    PS3 ≙ V3

# FIG 20

$V(f) \approx e^f$

$V(f) \approx f2$

V(f)

ca. 10 kHz

fbetr    fsys

f

# FIG 21

PS1

HI

B

# FIG 22

$$\chi + \omega\varepsilon_0\varepsilon''r$$

$$\omega\varepsilon_0\varepsilon'r$$

$\delta$

$\Longleftrightarrow$

Im

$\underline{G} \mathrel{\hat{=}} I$

$\underline{E} \mathrel{\hat{=}} U$

Re

# FIG 23

$A(f)$

$f_0$

$f_{res}$

$f$